# EUROPÄISCHE PATENTSCHRIFT

(11) **EP 1 174 469 B1**
(45) Veröffentlichungstag und Bekanntmachung des Hinweises auf die Patenterteilung: **14.06.2006**
(21) Anmeldenummer: 01116282.3
(22) Anmeldetag: 05.07.2001
(51) Int. Cl.: C08L 83/08, C08G 77/26, C08G 77/46, C08G 77/18

(54) **Lineare Polydialkylorganosiloxane mit Polyoxyalkylen- und aminofunktionellen Gruppen, die zusätzlich endständige Alkoxygruppen aufweisen**
Linear polydialkylorganosiloxanes having polyoxyalkylene- and amino-functional groups, and also terminal alkoxy groups
Polydialkylorganosiloxanes ayant des groupes avec fonctions polyoxyalkylène et amino, et des groupes terminaux alcoxy

(30) Priorität: 18.07.2000 DE 10034777
(43) Veröffentlichungstag der Anmeldung: 23.01.2002
(73) Patentinhaber: Goldschmidt GmbH, 45127 Essen (DE)
(72) Erfinder: Krakenberg, Manfred, 45307 Essen (DE); Leidreiter, Holger, Dr., 45529 Hattingen (DE); Oestreich, Sascha, Dr., 45279 Essen (DE); Stadtmüller, Stefan, Dr., 45309 Essen (DE); Walter, Alfred, 45239 Essen (DE)

(56) Entgegenhaltungen:
- US-A- 5 075 403
- US-A- 5 593 611

## Beschreibung

Gegenstand der vorliegenden Erfindung sind lineare Polyalkylorganosiloxane mit Polyoxyalkylen- und aminofunktionellen Gruppen, die zusätzlich endständige Alkoxygruppen aufweisen, deren Herstellung und Verwendung.

Es ist bekannt, dass Aminosiloxane mit primären und sekundären Stickstoffgruppen und teilweise vorhandenen reaktiven Silanolgruppen als Konditioniermittel in Haarshampoo-Formulierungen eingearbeitet werden. Diese Produkte liegen in den meisten Fällen als Mischung unter Zuhilfenahme von grenzflächenaktiven Stoffen in Wasser vor. Allein in ihrer ursprünglichen Form sind sie nicht wasserlöslich. Sie werden durch grenzflächenaktive Stoffe (Emulgatoren, beispielsweise primäre, multiple, sekundäre oder tertiäre Tensidsysteme) in Wasser solubilisiert und in eine wässrige Emulsion überführt. Diese grenzflächen-aktiven Stoffe bestehen üblicherweise aus ethoxylierten Fettalkoholen, ethoxylierten Glyceriden, Fettsäureestern oder ähnlichen Produkten. Insbesondere von der Firma Dow Corning sind unter den Bezeichnungen DC 929, DC 949 und DCQ 2-8220 verschiedene Produkte im Handel erhältlich. Auch von der Firma General Electric sind z. B. unter der Bezeichnung SME 253 Produkte im Handel erhältlich, die als solche ohne Zugabe von grenzflächenaktiven Stoffen in Wasser nicht löslich sind.

Um die Wasserlöslichkeit zu verbessern, können die Aminosiloxane zusätzlich mit Polyoxyalkylengruppen substituiert werden. Zum Beispiel beschreibt US-A-5 075 403 Polydialkylorganosiloxane, die Amino- und Polyoxyalkylengruppen tragen. Solche Produkte werden durch Cohydrosilylierung von Allylaminen und Allylpolyethern an Wasserstoffpolydimethylsiloxane hergestellt. Es wird hier jedoch beobachtet, dass die Hydrosilylierungsreaktion oft nicht die gewünschten Umsätze erreicht und so der gewünschte Modifizierungsgrad entlang der Polydimethylsiloxankette nicht eingestellt werden kann.

Weiterhin wird beobachtet, dass Aminosiloxane die zusätzliche Polyoxyalkylengruppen tragen, bei der Anwendung größtenteils in der wässrigen Phase verbleiben und nicht in gewünschter Weise auf das Haar aufziehen.

Weiterhin wird bei Aminosiloxanen generell beobachtet, dass durch die Freisetzung von Spuren flüchtiger Amine den Produkten ein unangenehmer Geruch anhaftet. Diese Gerüche sind im Bereich der Kosmetik unerwünscht. Versucht man den Geruch durch Destillation zu entfernen, wird in der Regel beobachtet, dass der unangenehme Geruch nach kurzer Zeit wieder auftritt.

Die Aufgabe der vorliegenden Erfindung bestand darin, Konditioniermittel auf der Basis von hydrophilen Polydialkylorganosiloxane herzustellen, die Aminosiloxan-Gruppen enthalten, einen milden Geruch aufweisen und im Haar dauerhaft konditionierende Eigenschaften zeigen.

Überraschenderweise wurde gefunden, dass lineare Polyalkylorganosiloxane mit Polyoxyalkylen- und aminofunktionellen Gruppen, die zusätzlich endständige Alkoxygruppen aufweisen, eine stark verbesserte Hydrophilie zeigen und hervorragende konditionierende Eigenschaften haben.

Weiterhin wurde gefunden, dass die Darstellung von linearen Polyalkylorganosiloxane mit Polyoxyalkylen- und aminofunktionellen Gruppen durch alkalische Äquilibrierung zu Produkten mit endständigen Alkoxygruppen führt und Probleme mit unvollständigen Umsätzen vermieden werden.

Der Gegenstand der vorliegenden Erfindung besteht somit in der Bereitstellung von linearen Polydialkylorganosiloxanen mit polyoxyalkylen- und aminofunktionellen Gruppen, die zusätzlich endständige Alkoxygruppen aufweisen, der allgemeinen Formel (I) 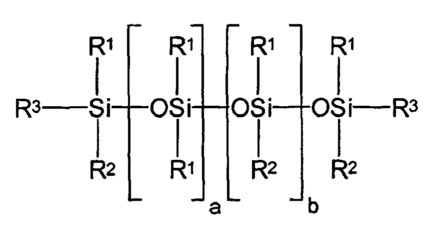 wobei
a = 5 bis 500 und
b = 1 bis 100 und
die Reste
R¹ = gleiche oder verschiedene aliphatische oder aromatische Kohlenwasserstoffreste mit bis zu 8 C-Atomen,
R² = R¹ , R^{2a} oder R^{2b} bedeuten, mit der Maßgabe, dass im statistischen Mittel mindestens in jeder zehnten Siloxankette ein Rest R^{2a} und in jeder Siloxankette mindestens je ein Rest R^{2b} enthalten ist,
wobei
der Rest R^{2a} ausgewählt ist aus den Resten einer aminofunktionellen Gruppe der allgemeinen Formel (II)

-[ (R⁴)_{c}-NR⁵]_{d}-R⁶

wobei
- R⁴ =: ein zweiwertiger C₁ bis C₁₂ -Kohlenwasserstoffrest, eine -OCH₂CH₂-Gruppe oder eine OCH₂CH(CH₃)- Gruppe,
- R⁵ =: ein einwertiger C₁ bis C₁₂-Kohlenwasserstoffrest oder ein Wasserstoffatom,
- R⁶ =: ein einwertiger aliphatischer oder aromatischer, gegebenenfalls substituierter C₁ bis C₁₂ Kohlenwasserstoffrest oder ein Wasserstoffatom,
mit
c = 1 bis 10
d =1 bis 5,
der Rest R^{2b} eine Polyoxyalkylengruppe der allgemeinen Formel (III)

- (CH₂)ₑ(OC₂H₄)_{f}(OC₃H₆)_{g}OR⁶

wobei
e = 2 bis 10
f = 2 bis 20
g = 0 bis 20
und
R³ = R¹ oder eine Gruppe der allgemeinen Formel (IV)

-OR¹

ist, mit der Maßgabe, dass im statistischen Mittel mindestens je ein Rest der allgemeinen Formel (IV) am Siloxangerüst enthalten ist.

Die vorliegende Erfindung beschreibt weiterhin die Darstellung von hydrophilen Polysiloxanen, an die gleichzeitig über Si-C-Bindungen, Amino- und Polyoxyalkylenketten geknüpft sind.

In einer bevorzugten Ausführungsform der vorliegenden Erfindung sind die Polyalkylorganosiloxane dadurch gekennzeichnet, dass
a = für eine Zahl im Bereich von 5 bis 100, insbesondere 10 bis 50,
b = für eine Zahl im Bereich von 3 bis 50, insbesondere 3 bis 30 und
c = für eine Zahl im Bereich von 1 bis 10, insbesondere 1 bis 6 steht.

Besonders bevorzugt im Sinne der vorliegenden Erfindung sind Polydialkylorganosiloxane, wobei in der allgemeinen Formel (I) der Rest R¹ für einen Methylrest steht.

Wie oben ausgeführt, ist eine notwendige Bedingung, dass in jedem Molekül der Polydialkylorganosiloxane im statistischen Mittel wenigstens eine der Gruppen R^{2b} und R³ = -OR¹ und mindestens in jeder zehnten Siloxankette ein Rest R^{2a} vorhanden ist. Besonders bevorzugt im Sinne der vorliegenden Erfindung ist es, wenn das Molverhältnis der Gruppen R^{2a} zu R^{2b} zu R³ = -OR¹ 0,5 zu 2 zu 1 ist.

Eine weitere bevorzugte Ausführungsform der vorliegenden Erfindung besteht im Verfahren zur Herstellung der oben definierten Polyalkyldiorganosiloxane. Diese werden im Sinne der vorliegenden Erfindung beispielsweise dadurch herstellt, dass man ein Gemisch aus einem geeigneten Polyethersiloxan der allgemeinen Formel 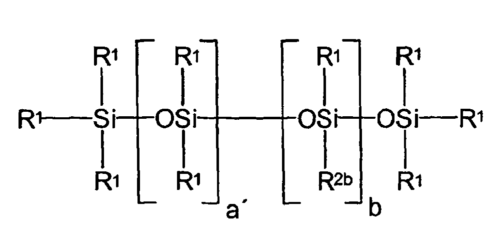 und/oder einem cyclischen Polyethersiloxan der allgemeinen Formel 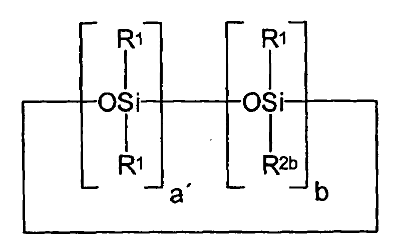 wobei R¹, R^{2b} und b die oben angegebene Bedeutung haben und a' = 0 bis 500 ist,
einem geeigneten Dialkoxyaminosilan und/oder dessen Teilhydrolysat, gegebenenfalls Octamethylcyclotetrasiloxan und/oder Decamethylcyclopentasiloxan mit Hilfe eines basischen Katalysators äquilibriert.

Bei den basischen Katalysatoren handelt es sich insbesondere um Katalysatoren, wie Alkalihydroxide, insbesondere Natrium-, Kalium- und Cäsiumhydroxide, Alkalialkoholate, quarternäre Ammoniumhydroxide, wie Tetramethylammoniumhydroxid, Benzyltrimethylammoniumhydroxid, Benzyltriethylammoniumhydroxid, Benzyltrimethylammoniumbutylat, β-Hydroxyethyltrimethylammonium-2-ethylhexoat, quaternäre Phosphoniumhydroxide, wie Tetra-n-butylphosphoniumhydroxid und Tri-n-butyl-3-[tris-(trimethylsiloxy)silyl]-n-propyl-phosphoniumhydroxid, Alkalisiloxanolate und Ammoniumorganosiloxanolate, wie Benzyltrimethylammoniumsiloxanolat und Tetramethylammoniumsiloxanolat.

Es werden vorzugsweise 10 ppm bis 1 Gew.-%, insbesondere 50 bis 2000 ppm an basischem Katalysator, jeweils bezogen auf das Gewicht des Gesamtansatzes, verwendet.

Vorzugsweise weisen die Dialkoxyaminosilane die allgemeine Formel

(R¹) (R¹O)₂ Si (R^{2a})

auf, in der
R¹, R^{2a} die oben angegebene Bedeutung haben.
Beispiele für Dialkoxyaminosilane sind N-Aminoethyl-3-aminopropylmethyldimethoxysilan, N-Aminoethyl-3-aminopropylmethyldiethoxysilan, 3-Aminopropylmethyldimethoxysilan und/oder 3-Aminopropylmethyldiethoxysilan.

Teilhydrolysate der Dialkoxyaminosilane werden in einem vorhergehenden Reaktionsschritt durch Kondensation der Aminosilane mit Wasser hergestellt, wobei solche Teilhydrolysate mit bis zu 30 Siliciumatomen bevorzugt sind.

Ferner wird die Verwendung der erfindungsgemäßen Verbindungen zur Herstellung von Haarpflegeformulierungen, wie konditionierende Formulierungen ("Conditioner"), Haarspülungen, Konditioniershampoos, sowie Konditioniermittel, die nach der Anwendung im Haar verbleiben ("leave-in" Produkte) beschrieben. Ebenso betrifft die vorliegende Erfindung die Verwendung der erfindungsgemäßen Verbindungen zur Behandlung von Textiloberflächen und von natürlichen und/oder synthetischen Fasern und/oder "nonwoven" Materialien, insbesondere zur Verbesserung des Weichgriffes und der Hydrophilie.

Die erfindungsgemäßen Polydialkylorganosiloxane sind ferner geeignet zur Herstellung von tensidischen Formulierungen, wobei das Tensid ausgewählt ist aus der Gruppe der anionischen Tenside, kationischen Tenside, nichtionischen Tenside und/oder amphoteren Tenside.

Die erfindungsgemäßen Polydialkylorganosiloxane neigen nur in geringem Maße zur Bildung von Nitroaminen auch bei Anwesenheit von primären oder sekundären Aminen.

### Beispiel 1

### Allgemeine Herstellvorschrift für die erfindungsgemäßen Beispiele:

In einem 2-1-Dreihalskolben, der mit einem Rührer, Intensivkühler, Thermometer und Tropftrichter ausgerüstet war, wurden 480,7 g des Polyethersiloxans mit folgender durchschnittlicher Struktur

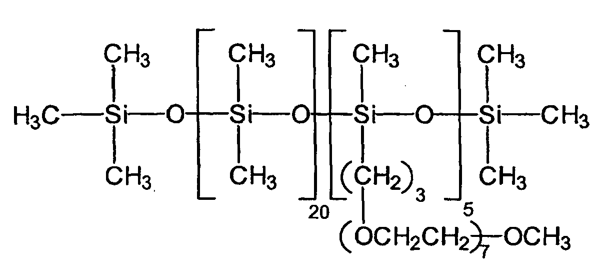

50 g 3-Aminopropyl-methyl-diethoxysilan, 493,6 g Octamethylcyclotetrasiloxan und 0,1 Gew.-% an Tetramethylammoniumhydroxyd x 5 Kristallwasser vorgelegt und bei 90 °C für 5 Stunden gerührt. Danach wurde für 2 Stunden auf 150 °C aufgeheizt, um den Katalysator zu zerstören. Anschließend wurden die flüchtigen Bestandteile abgetrennt (130 °C /10 mm) Das Produkt wurde nach Abkühlen auf Raumtemperatur filtriert. Es wurde eine hellgelbe, klare Flüssigkeit mit einer Viskosität von ca. 60 mPas [25°C] und einem Stickstoffgehalt von 0,356 % erhalten.

### Vergleichsbeispiel 1

100g eines Siliconöls mit einer Viskosität von 1000 mPas wurden mit 4,5g 3-Aminopropyl-methyl-diethoxysilan und 0,1g eines basischen Katalysators gemischt. Es entstand eine weißlich-trübe Mischung. Unter Rühren wurde die Mischung auf 90°C erhitzt. Nach 5h Rühren wurde die Temperatur auf 130°C erhöht und flüchtige Bestandteile durch Anlegen eines Vakuums entfernt. Man erhielt ein klares Produkt mit einer Viskosität von 80 mPas und 0,32 % Stickstoffgehalt.

### Vergleichsbeispiel 2

Als Vergleichsbeispiel 2 wurde handelsübliches Cetyltrimethylammoniumchlorid verwendet.

### Vergleichsbeispiel 3

Als Vergleichsbeispiel 3 wurde eine kationische Aminosiloxanemulsion DC949 des Herstellers Dow Corning verwendet.

### Vergleichsbeispiel 4

Zur direkten Co-hydrosilylierung von Amino-polyethersiloxanen wurden 267g eines Wasserstoffsiloxans mit folgender durchschnittlicher Formel 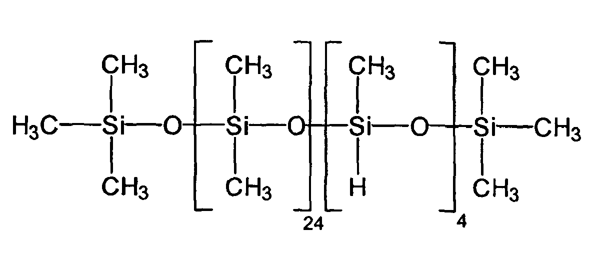 zusammen mit 240g eines Allylpolyethers mit folgender allgemeinen Formel 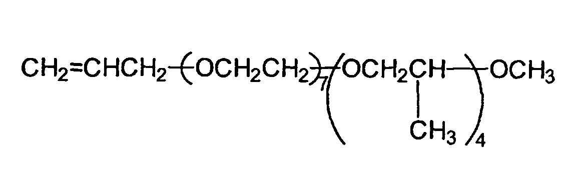 und 14,3g Allylamin in Gegenwart von 10mg cis-Pt(NH₃)₂Cl₂ unter Rühren auf 135°C erhitzt und 8h bei dieser Temperatur gerührt. Nach 8h wurden 98% Umsatz (bez. auf SiH) erreicht. Das gelbe Produkt wurde anschließend bei 135°C im Ölpumpenvakuum destilliert. Man erhielt ein Produkt mit einer Viskosität von 75mPas und einem Stickstoffgehalt von 0,36%.

### Herstellungsbeispiel 1

16,5g eines Polyethersiloxans mit der durchschnittlichen Struktur 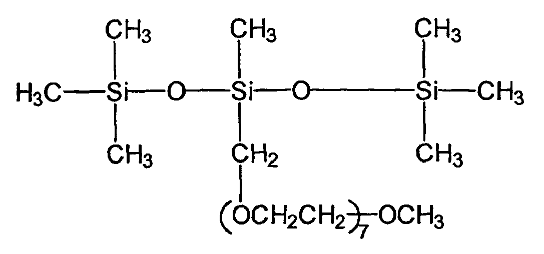 wurden mit 75g Octamethylcyclotetrasiloxan, 5,6g 3-Aminopropyl-methyl-diethoxysilan und 0,1g eines basischen Katalysators gemischt. Es entstand eine weißlich-trübe Mischung. Unter Rühren wurde die Mischung auf 90°C erhitzt. Nach 5h Rühren wurde die Temperatur auf 130°C erhöht und flüchtige Bestandteile durch Anlegen eines Vakuums entfernt. Man erhielt ein klares Produkt mit einer Viskosität von 60 mPas und 0,39 % Stickstoffgehalt.

### Herstellungsbeispiel 2

16,5g eines Polyethersiloxans mit der durchschnittlichen Struktur 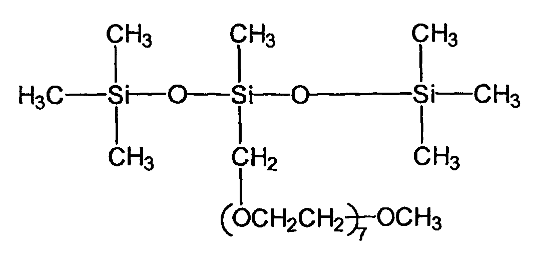 wurden mit 75g Octamethylcyclotetrasiloxan, 8,0g N-(2-Aminoethyl-3-aminopropyl)-methyl-dimethoxysilan und 0.1g eines basischen Katalysators gemischt. Es entstand eine weißlich-trübe Mischung. Unter Rühren wurde die Mischung auf 90°C erhitzt. Nach 5h Rühren wurde die Temperatur auf 130°C erhöht und flüchtige Bestandteile durch Anlegen eines Vakuums entfernt. Man erhielt ein klares Produkt mit einer Viskosität von 67 mPas und 0,39% Stickstoffgehalt.

### Herstellungsbeispiel 3

62,7g eines Polyethersiloxans mit der durchschnittlichen Struktur 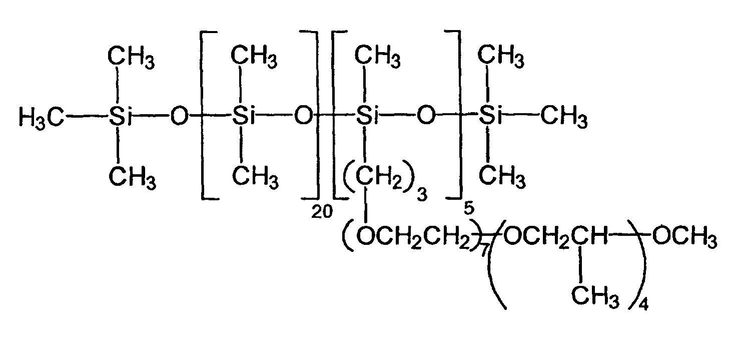 wurden mit 31,5g Octamethylcyclotetrasiloxan, 5,8g 3-Aminopropyl-methyl-diethoxysilan und 0.1g eines basischen Katalysators gemischt. Es entstand eine weißlich-trübe Mischung. Unter Rühren wurde die Mischung auf 90°C erhitzt. Nach 5h Rühren wurde die Temperatur auf 130°C erhöht und flüchtige Bestandteile durch Anlegen eines Vakuums entfernt. Man erhielt ein klares Produkt mit einer Viskosität von 55 mPas und 0,37% Stickstoffgehalt.

### Herstellungsbeispiel 4

62,7g eines Polyethersiloxans mit der durchschnittlichen Struktur 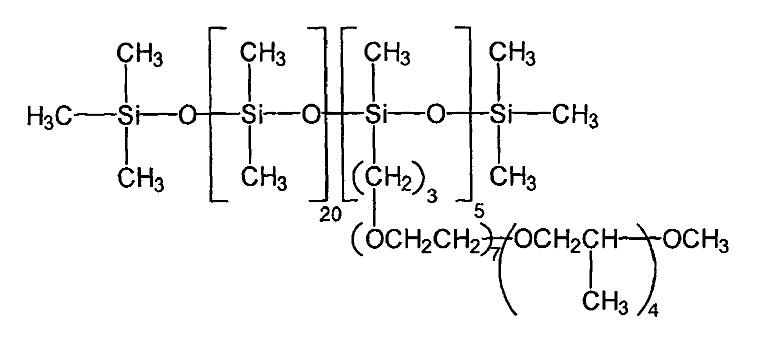 wurden mit 31,5g Octamethylcyclotetrasiloxan, mit 4,6g eines Teilhydrolysats von 3-Aminopropyl-methyl-diethoxysilan mit der durchschnittlichen Struktur 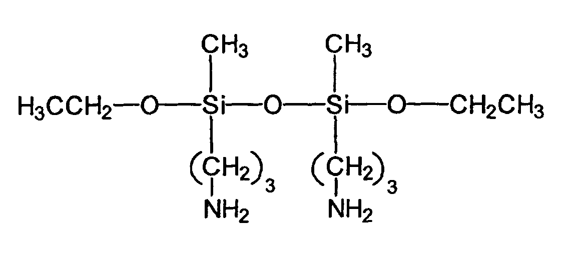 und 0,1g eines basischen Katalysators gemischt. Es entstand eine weißlich-trübe Mischung. Unter Rühren wurde die Mischung auf 90°C erhitzt. Nach 5h Rühren wurde die Temperatur auf 130°C erhöht und flüchtige Bestandteile durch Anlegen eines Vakuums entfernt. Man erhielt ein klares Produkt mit einer Viskosität von 87mPas und 0,36% Stickstoffgehalt.

### Anwendungsbeispiele

Für die anwendungstechnische Beurteilung wurden Haartressen, die für sensorische Tests verwendet wurden, durch eine Dauerwellbehandlung und eine Bleichbehandlung standardisiert vorgeschädigt. Dazu wurden friseurübliche Produkte verwendet.

### Materialien

- Dauerwell-Flüssigkeit (ondi® , Wella)
- Fixierung (neutrafix® , Wella)
- Blondierpulver (blondor special® , Wella)
- H₂O₂ (Welloxyd 9%® , Wella)
- Shampoo ohne Pflegeanteil (z.B. Natriumlaurylethersulfat (12% WAS), NaCl verdickt)
- Bechergläser
- Haar-Färbe-Pinsel

Die Behandlung wurde in der folgenden Reihenfolge durchgeführt:

### 1. Dauerwell-Behandlung

Die Haartressen wurden mit der Dauerwellflüssigkeit angefeuchtet (Gewichtsverhältnis Haar : Flüssigkeit = 1 : 2). Nach einer Einwirkzeit von 15 min bei Raumtemperatur in einem abgedeckten Becherglas wurde die Dauerwellflüssigkeit 2 min sorgfältig ausgespült. Anschließend wurden die Haarsträhnchen mit einem Handtuch sanft ausgedrückt.

Die Fixierung (Gewichtsverhältnis Haar : Flüssigkeit = 1 : 2) hatte eine Einwirkzeit von 10 min bei Raumtemperatur. Anschließend wurde die Fixierung sorgfältig 2 min ausgespült.

Die Haare wurden anschließend über Nacht bei Raumtemperatur getrocknet.

### 2. Bleich-Behandlung

Das Blondierpulver und das H₂O₂ wurden zu einer Paste (Gewichtsverhältnis Pulver : H₂O₂ = 2 : 3) verarbeitet. Dann wurde die Paste sofort auf die dauergewellten Haare mit einem Pinsel aufgetragen. Die Einwirkzeit betrug 30 min bei Zimmertemperatur. Anschließend wurde die Blondierpaste unter fließendem Wasser 2 min ausgespült.

Dann wurde das Haar mit einem Shampoo ohne Conditioner 1 min gewaschen (Shampoomenge: 0,5 ml/ Hairtress) und dann für eine min ausgespült.

Bevor die vorgeschädigten Haarsträhnchen für Sensorik-Tests verwendet wurden, wurden sie über Nacht bei Raumtemperatur getrocknet.

### Testrezeptur:

Die konditionierenden Produkte wurden in einer einfachen Haarspülung mit folgendem Aufbau

| Produkt | Gewichtsanteile |
|---|---|
| TEGINACID® C Ceteareth-25 | 0.5 % |
| TEGO® Alkanol 16 Cetyl Alcohol | 2.0 % |
| "Conditioner" | 2.0 % |
| Wasser | ad. 100 % |
| Citronensäure | ad. pH 4.0 ± 0.3 |

getestet.

Als "Conditioner" sind die in den Herstellbeispielen und Vergleichsbeispielen erhaltenen Produkte bezeichnet.

Standardisierte Behandlung von vorgeschädigten Haarsträhnen mit konditionierenden Proben:

Die, wie oben beschrieben, vorgeschädigten Haarsträhnchen wurden wie folgt mit der oben beschriebenen konditionierenden Spülung behandelt:

Die Haarsträhnen wurden unter fließendem, warmem Wasser benetzt. Das überschüssige Wasser wurde leicht von Hand ausgedrückt, dann wurde die Spülung aufgebracht und sanft im Haar eingearbeitet (1 ml /Haarsträhne (2g)). Nach einer Verweilzeit von 1 min wurde das für 1 min gespült.

Vor der sensorischen Beurteilung wurde das Haar an der Luft bei 50% Luftfeuchtigkeit und 25°C für mindestens 12h getrocknet.

### Beurteilungskriterien:

Die sensorische Bewertungen erfolgte nach Noten, die auf einer Skala von 1 bis 5 vergeben wurden, wobei 1 die schlechteste und 5 die beste Bewertung war.

### Naßkämmbarkeit

| | | |
|---|---|---|
| 5 | grobe Zahnung [des Kamms] | Keine Knoten, das Haar ist leicht entwirrbar. |
| | feine Zahnung | Sehr leichtes Durchkämmen, kein Widerstand spürbar. |
| 4 | grobe Zahnung | Einzelne Knoten. Das Haar ist leicht entwirrbar. |
| | feine Zahnung | Leichtes Durchkämmen, geringer Widerstand spürbar. |
| 3 | grobe Zahnung | Wenige Knoten, geringer Widerstand. |
| | feine Zahnung | Etwas Widerstand spürbar, der nach mehrmaligem Kämmen nachlässt. |
| 2 | grobe Zahnung | Einige Knoten, merklicher Widerstand. |
| | feine Zahnung | Merklicher Widerstand, der nach mehrmaligem Kämmen nicht nachlässt. |
| 1 | grobe Zahnung | Viele Knoten, starker Widerstand. |
| | feine Zahnung | Sehr starker Widerstand, manchmal ist das Haar nicht durchkämmbar. |

### Naßgriff

| | |
|---|---|
| 5 | sehr glatt, weich aber trotzdem schön fest, griffig, nicht schmierig/klebrig (keine Rückstände fühlbar) |
| 4 | glatt und weich und/oder nur geringe Rückstände spürbar |
| 3 | glatt, etwas hart und/oder etwas Rückstände spürbar |
| 2 | hart und/oder merkliche schmierige, wachsige Rückstände |
| 1 | sehr hart, rauh, stumpf und/oder extrem schmierig, klebrig (deutlich spürbare schmierige, wachsige Rückstände spürbar) |

### Trockenkämmbarkeit

| | | |
|---|---|---|
| 5 | grobe Zahnung | Keine Knoten, das Haar ist leicht entwirrbar |
| | feine Zahnung | Sehr leichtes Durchkämmen, kein Widerstand spürbar, das Haar lädt sich nicht auf |
| 4 | grobe Zahnung | Einzelne Knoten. Das Haar ist leicht entwirrbar |
| | feine Zahnung | Leichtes Durchkämmen, geringer Widerstand spürbar, Haar lädt sich minimal auf |
| 3 | grobe Zahnung | Wenige Knoten, geringer Widerstand |
| | feine Zahnung | Etwas Widerstand spürbar, der nach mehrmaligem Kämmen nachlässt, Haar lädt sich wenig auf |
| 2 | grobe Zahnung | Einige Knoten, merklicher Widerstand |
| | feine Zahnung | Merklicher Widerstand, der nach mehrmaligem Kämmen nicht nachlässt, Haar lädt sich auf |
| 1 | grobe Zahnung | Viele Knoten, starker Widerstand |
| | feine Zahnung | Sehr starker Widerstand, manchmal ist das Haar nicht durchkämmbar, Haar lädt sich deutlich auf |

### Trockengriff

| | |
|---|---|
| 5 | sehr glatt, weich aber trotzdem fest, voll, griffig |
| 4 | glatt und weich |
| 3 | glatt, leicht hart und/oder leicht stumpf (Rückstände) |
| 2 | hart, etwas stumpf |
| 1 | rauh, hart, trocken, stumpf (Rückstände) |

### Trocken-Aussehen

| | |
|---|---|
| 5 | extrem glänzend |
| 4 | Glänzend |
| 3 | etwas glänzend |
| 2 | wenig glänzend, leicht stumpf |
| 1 | stumpf, kein Glanz |

### Volumen

Um das Volumen zu beurteilen, wurde die Haarsträhne leicht geschüttelt, indem sie an der Klebestelle gehalten wurde.

| | |
|---|---|
| 5 | lockerer, bauschiger Fall, Ø im Spitzenbereich rel. groß |
| 4 - 2 | Zwischenstufen |
| 1 | Haar hängt schwer herab, Ø unterhalb der Bündelung ähnlich dem Spitzenbereich |

In der folgenden Tabelle werden die Ergebnisse der sensorischen Beurteilung der wie oben beschrieben durchgeführten Behandlung der Haarstränchen mit erfindungsgemäßen Aminopropylsiloxancopolyolen bzw. Vergleichsbeispielen verglichen.

| Rang | Conditioner | Detangling | Naß Kämmbarkeit | Naß Griff | Trocken Kämmbarkeit | Trocken Griff | Glanz | Volumen | Fly-away |
|---|---|---|---|---|---|---|---|---|---|
| 1 | vergleichsbeispiel 2 | 4,75 | 5 | 4,25 | 5 | 4,5 | 3,5 | 3 | 10 |
| 2 | Herstellungsbeispiel 3 | 4,75 | 5 | 4,25 | 4,25 | 3,5 | 3 | 3,75 | 19 |
| 5 | vergleichsbeispiel 3 | 3 | 3 | 3 | 3,5 | 4,25 | 3,75 | 1,5 | 22,5 |
| 3 | Herstellungsbeispiel 4 | 5 | 4,5 | 3,5 | 3,75 | 2,75 | 3 | 4,25 | 18 |
| 6 | Herstellungsbeispiel 1 | 2,25 | 2,5 | 2,75 | 3,75 | 3,5 | 3,5 | 3,75 | 35 |
| 7 | Herstellungsbeispiel 2 | 1,75 | 3,25 | 2 | 3,75 | 3 | 3,5 | 2,5 | 40,5 |
| 4 | Vergleichsbeispiel 4 | 4,5 | 4,5 | 3,75 | 4 | 3 | 3,5 | 2,75 | 22 |
| 8 | vergleichsbeispiel 1 | 2,5 | 3,25 | 3,5 | 4,5 | 4 | 4 | 2,75 | 43 |
| 9 | Kontrolle (Placebo) | 1,5 | 1,25 | 1,75 | 2,75 | 2,75 | 3 | 1,5 | 50 |

Es zeigte sich, dass die erfindungsgemäßen linearen Polyalkylorganosiloxane mit Polyoxyalkylen- und aminofunktionellen Gruppen, die zusätzlich endständige Alkoxygruppen aufweisen, gegenüber den polyetherfreien und alkoxyfreien Aminosiloxanen in der sensorischen Beurteilung erheblich bessere Bewertungen erhielten.

## Patentansprüche

1. Lineare Polydialkylorganosiloxane mit polyoxyalkylen- und aminofunktionellen Gruppen, die zusätzlich endständige Alkoxygruppen aufweisen, der allgemeinen Formel (I) 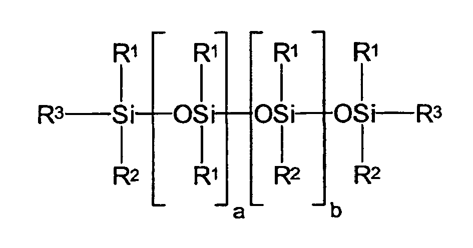 wobei
a = 5 bis 500 und
b = 1 bis 100 und
die Reste
R¹ = gleiche oder verschiedene aliphatische oder aromatische Kohlenwasserstoffreste mit bis zu 8 C-Atomen,
R² = R¹ , R^{2a} oder R^{2b} bedeuten, mit der Maßgabe, dass im statistischen Mittel mindestens in jeder zehnten Siloxankette ein Rest R^{2a} und in jeder Siloxankette mindestens je ein Rest R^{2b} enthalten ist,
wobei
der Rest R^{2a} ausgewählt ist aus den Resten einer aminofunktionellen Gruppe der allgemeinen Formel (II)
- [ (R⁴)_{c}-NR⁵]_{d}-R⁶
wobei
R⁴ = ein zweiwertiger C₁ bis C₁₂ -Kohlenwasserstoffrest, eine -OCH₂CH₂-Gruppe oder eine OCH₂CH(CH₃)- Gruppe,
R⁵ = ein einwertiger C₁ bis C₁₂-Kohlenwasserstoffrest oder ein Wasserstoffatom,
R⁶ = ein einwertiger aliphatischer oder aromatischer, gegebenenfalls substituierter C₁ bis C₁₂ Kohlenwasserstoffrest oder ein Wasserstoffatom,
mit
c = 1 bis 10
d = 1 bis 5,
der Rest R^{2b} eine Polyoxyalkylengruppe der allgemeinen Formel (III)
-(CH₂)ₑ(OC₂H₄)_{f}(OC₃H₆)_{g}OR⁶
wobei
e = 2 bis 10
f = 2 bis 20
g = 0 bis 20
und
R³ = R¹ oder eine Gruppe der allgemeinen Formel (IV)
-OR¹
ist, mit der Maßgabe, dass im statistischen Mittel mindestens je ein Rest der allgemeinen Formel (IV) am Siloxangerüst enthalten ist.

2. Polydialkylorganosiloxane nach Anspruch 1, **dadurch gekennzeichnet dass**
a = für eine Zahl im Bereich von 5 bis 100, insbesondere 10 bis 50,
b = für eine Zahl im Bereich von 3 bis 50, insbesondere 3 bis 30 und
c = für eine Zahl im Bereich von 1 bis 10, insbesondere 1 bis 6 steht.

3. Polydialkylorganosiloxane nach Anspruch 1 oder 2, **dadurch gekennzeichnet, dass** in der allgemeinen Formel (I) R₁ = Methyl ist.

4. Polydialkylorganosiloxane nach einem der Ansprüche 1 bis 3, **dadurch gekennzeichnet, dass** das Molverhältnis der Gruppen R^{2a} zu R^{2b} zu R³ = -OR¹ 0,5 zu 2 zu 1 ist.

5. Verfahren zur Herstellung von Polydialkylorganosiloxanen nach einem der Ansprüche 1 bis 4, **dadurch gekennzeichnet, dass** man wenigstens ein Polyethersiloxan der allgemeinen Formel 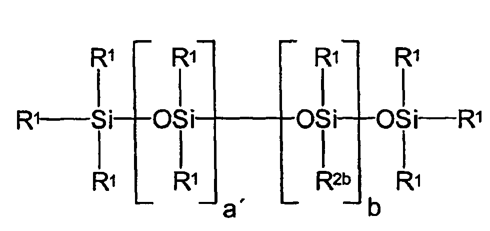 und/oder ein cyclisches Polyethersiloxan der allgemeinen Formel 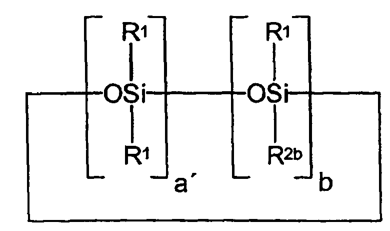 wobei R¹, R^{2b} und b die oben angegebene Bedeutung haben und a' = 0 bis 500 ist,
ein geeignetes Dialkoxyaminosilan und/oder dessen Teilhydrolysat, gegebenenfalls Octamethylcyclotetrasiloxan und/oder Decamethylcyclopentasiloxan mit Hilfe eines basischen Katalysators äquilibriert.

6. Verwendung von Polydialkylorganosiloxanen nach einem der Ansprüche 1 bis 5 zur Herstellung von Haarpflege-Formulierungen.

7. Verwendung von Polydialkylorganosiloxanen nach einem der Ansprüche 1 bis 5 zur Behandlung von natürlichen und/oder synthetischen Fasern und/oder "nonwoven" Materialien.

8. Verwendung von Polydialkylorganosiloxanen nach einem der Ansprüche 1 bis 5 zur Herstellung von tensidischen Formulierungen, wobei das Tensid ausgewählt ist aus der Gruppe der anionischen Tenside, kationischen Tenside, nichtionischen Tenside und/oder amphoteren Tenside.

## Claims

1. Linear polydialkylorganosiloxanes having polyoxyalkylene- and amino-functional groups which additionally have terminal alkoxy groups, of the general formula (I) 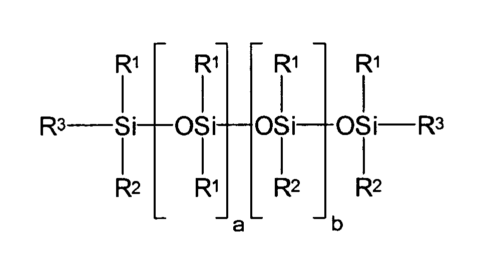 where
a = 5 to 500 and
b = 1 to 100 and
the radicals
R¹ = identical or different aliphatic or aromatic hydrocarbon radicals having up to 8 carbon atoms,
R² = R¹, R^{2a} or R^{2b}, with the proviso that on statistical average a radical R^{2a} is present in at least every tenth siloxane chain, and at least one radical R^{2b} is present in each siloxane chain,
where
the radical R^{2a} is chosen from the radicals of an amino-functional group of the general formula (II)
- [ (R⁴)_{c}-NR⁵]_{d}-R⁶
where
R⁴ = a divalent C₁ to C₁₂ hydrocarbon radical, an -OCH₂CH₂₋group or an OCH₂CH(CH₃)- group,
R⁵ = a monovalent C₁ to C₁₂ hydrocarbon radical or a hydrogen atom,
R⁶ = a monovalent aliphatic or aromatic, optionally substituted C₁ to C₁₂ hydrocarbon radical or a hydrogen atom,
where
c = 1 to 10
d = 1 to 5,
the radical R^{2b} is a polyoxyalkylene group of the general formula (III)
- (CH₂)ₑ(OC₂H₄)_{f}(OC₃H₆)_{g}OR⁶
where
e = 2 to 10
f = 2 to 20
g = 0 to 20
and
R³ = R¹ or a group of the general formula (IV)
-OR¹,
with the proviso that on statistical average at least one radical of the general formula (IV) is present on the siloxane backbone.

2. Polydialkylorganosiloxanes according to Claim 1, **characterized in that**
a = a number in the range from 5 to 100, in particular 10 to 50,
b = a number in the range from 3 to 50, in particular 3 to 30 and
c = a number in the range from 1 to 10, in particular 1 to 6.

3. Polydialkylorganosiloxanes according to Claim 1 or 2, **characterized in that** in the general formula (I) R₁ = methyl.

4. Polydialkylorganosiloxanes according to one of Claims 1 to 3, **characterized in that** the molar ratio of the groups R^{2a} to R^{2b} to R³ = -OR¹ is 0.5 to 2 to 1.

5. Process for the preparation of polydialkylorganosiloxanes according to one of Claims 1 to 4, **characterized in that** at least one polyethersiloxane of the general formula 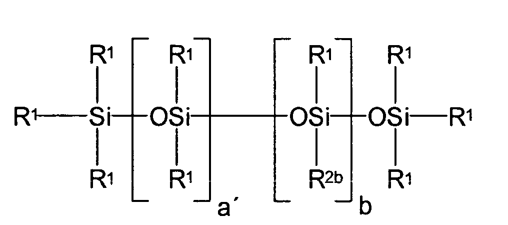 and/or a cyclic polyethersiloxane of the general formula 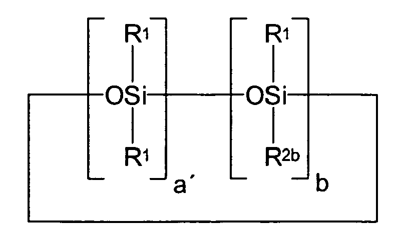 where R¹, R^{2b} and b are as defined above and a' = 0 to 500, a suitable dialkoxyaminosilane and/or its partial hydrolysate, optionally octamethylcyclotetrasiloxane and/or decamethylcyclopentasiloxane are equilibrated using a basic catalyst.

6. Use of polydialkylorganosiloxanes according to one of Claims 1 to 5 for the preparation of haircare formulations.

7. Use of polydialkylorganosiloxanes according to one of Claims 1 to 5 for the treatment of natural and/or synthetic fibres and/or "nonwoven" materials.

8. Use of polydialkylorganosiloxanes according to one of Claims 1 to 5 for the preparation of surface-active formulations, where the surfactant is chosen from the group of anionic surfactants, cationic surfactants, nonionic surfactants and/or amphoteric surfactants.

## Revendications

1. Polydialkylorganosiloxanes linéaires renfermant des groupes polyoxyalkylène et à fonction amino, qui renferment en outre des groupes alcoxy terminaux, de formule générale (I) 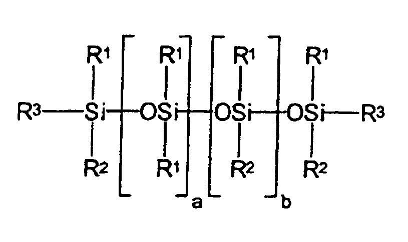 dans laquelle
a vaut de 5 à 500, et
b vaut de 1 à 100, et
les radicaux
R¹ représente des radicaux hydrocarbonés identiques ou différents, aliphatiques ou aromatiques, renfermant jusqu'à 8 atomes de carbone,
R² représente R¹, R^{2a} ou R^{2b}, à condition qu'en moyenne statistique, un radical R^{2a} soit présent au moins toutes les dix chaînes de siloxane, et que dans chaque chaîne de siloxane, au moins un radical R^{2b} soit présent,
où
le radical R^{2a} est choisi parmi les radicaux d'un groupe à fonction amino de formule générale (II)
- [ (R⁴)_{c}-NR⁵]_{d}-R⁶
dans laquelle
R⁴ représente un radical hydrocarboné en C₁ à C₁₂ bivalent, un groupe -OCH₂CH₂ ou un groupe OCH₂CH(CH₃),
R⁵ représente un radical hydrocarboné en C₁ à C₁₂ monovalent ou un atome d'hydrogène,
R⁶ représente un radical hydrocarboné en C₁ à C₁₂ monovalent, aliphatique ou aromatique, éventuellement substitué, ou un atome d'hydrogène,
avec
c valant de 1 à 10,
d valant de 1 à 5,
le radical R^{2b} représente un groupe polyoxyalkylène de formule générale (III)
- (CH₂)ₑ(OC₂H₄)_{f}(OC₃H₆)_{g}OR⁶
dans laquelle
e vaut de 2 à 10,
f vaut de 2 à 20,
g vaut de 0 à 20,
et
R³ représente R¹ ou un groupe de formule générale (IV)
-OR¹
à condition qu'en moyenne statistique, au moins un radical de formule générale (IV) soit présent sur chaque squelette de siloxane.

2. Polydialkylorganosiloxanes selon la revendication 1, **caractérisés en ce que**
a représente un nombre dans la plage de 5 à 100, en particulier de 10 à 50,
b représente un nombre dans la plage de 3 à 50, en particulier de 3 à 30 et
c représente un nombre dans la plage de 1 à 10, en particulier de 1 à 6.

3. Polydialkylorganosiloxanes selon la revendication 1 ou 2, **caractérisés en ce que**, dans la formule générale (I), R₁ représente un groupe méthyle.

4. Polydialkylorganosiloxanes selon l'une quelconque des revendications 1 à 3, **caractérisés en ce que** le rapport molaire des groupes R^{2a} : R^{2b} : R³ = -OR¹ est de 0,5 : 2 : 1.

5. Procédé de préparation de polydialkylorganosiloxanes selon l'une quelconque des revendications 1 à 4, **caractérisé en ce qu'**au moins un polyéthersiloxane de formule générale 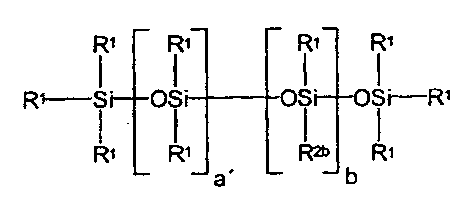 et/ou un polyéther siloxane cyclique de formule générale 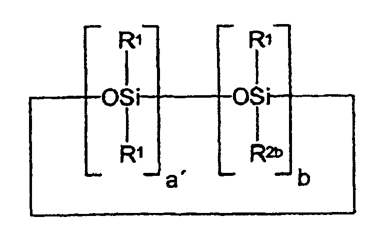 dans lesquelles R¹, R^{2b} et b présentent la signification indiquée ci-dessus et a' vaut de 0 à 500,
équilibrent un dialcoxyaminosilane approprié et/ou son hydrolysat partiel, éventuellement l'octaméthylcyclotétrasiloxane et/ou le décaméthylcyclopentasiloxane, à l'aide d'un catalyseur basique.

6. Utilisation de polydialkylorganosiloxanes selon l'une quelconque des revendications 1 à 5 pour la production de formulations de soins des cheveux.

7. Utilisation de polydialkylorganosiloxanes selon l'une quelconque des revendications 1 à 5 pour le traitement de fibres naturels et/ou synthétiques et/ou de matières « non tissées ».

8. Utilisation de polydialkylorganosiloxanes selon l'une quelconque des revendications 1 à 5 pour la production de formulations tensioactives, dans laquelle le tensioactif est choisi parmi le groupe constitué de tensioactifs anioniques, de tensioactifs cationiques, de tensioactifs non ioniques et/ou de tensioactifs amphotères.
